# FASCICULE DE BREVET EUROPEEN

(11) **EP 4 410 095 B1**
(45) Date de publication et mention de la délivrance du brevet: **05.08.2026**
(21) Numéro de dépôt: 23305129.1
(22) Date de dépôt: 02.02.2023
(51) Int. Cl.: A01G 17/02, G01S 17/86, G01S 17/88, G05D 1/243, G05D 1/648, G05D 1/689, A01B 39/16

(54) **ROBOT AGRICOLE AUTONOME DE COUPE DE DRAGEONS ET PROCÉDÉ ASSOCIÉ**
AUTONOMER LANDWIRTSCHAFTLICHER ROBOTER ZUM SCHNEIDEN VON STOCKAUSSCHLAG UND VERFAHREN DAFÜR
AUTONOMOUS AGRICULTURAL ROBOT FOR CUTTING BASAL SHOOTS AND ASSOCIATED METHOD

(43) Date de publication de la demande: 07.08.2024
(73) Titulaire: Association Nationale des Producteurs de Noisettes, 47290 Cancon (FR); Mial Tech, 33290 Ludon-Medoc (FR)
(72) Inventeur: MILLOT, Christophe, 40410 Liposthey (FR); MILLOT, Yohan, 40410 Liposthey (FR); MILLOT, Eloïse, 40410 Liposthey (FR); DUPONT, Marion, 33290 Ludon Médoc (FR); BARDOU, Alexandre, 47290 Cancon (FR); THOMAS, Maud, 47290 Cancon (FR)
(74) Mandataire: Santarelli

(56) Documents cités:
- EP-A1- 3 574 744
- EP-A2- 4 016 112
- FR-A1- 2 617 366
- FR-A1- 3 053 870
- US-A1- 2021 092 911

## Description

### DOMAINE TECHNIQUE

La présente invention appartient au domaine des équipements industriels utilisés en agriculture, et concerne plus particulièrement un robot autonome de coupe de drageons.

La présente invention trouve une application directe dans la culture d'arbustes de la famille des Bétulacées, et plus particulièrement de noisetiers, en limitant le développement des drageons et ainsi améliorer le rendement desdits noisetiers et le ramassage des noisettes.

### ÉTAT DE L'ART

La culture des fruits à coques, de la noisette entre autres, a connu un important développement au début du 20^{ème} siècle, notamment grâce à l'amélioration des techniques de culture ainsi que de récolte.

Les principales zones de production de noisette se trouvent en Europe (Italie, Turquie, France, Espagne), en Amérique du Nord (Etats-Unis, Canada) ainsi qu'en Asie (essentiellement la Chine).

La noisette est également cultivée dans d'autres régions du monde, comme l'Australie, l'Afrique du Nord et l'Amérique du Sud, mais en moindre quantité.

Au cours du 20^{ème} siècle, la demande en noisette a continué de croître en raison de sa popularité en tant qu'ingrédient dans de nombreux produits alimentaires, ainsi que pour ses propriétés nutritionnelles.

Ainsi, la production mondiale a augmenté de près de 600 % entre le milieu du 20^{ème} siècle, pour atteindre en 2021 une quantité de 1 080 000 tonnes, selon l'Organisation des Nations Unis pour l'alimentation et l'agriculture.

Ce niveau de production a pu être atteint en augmentant les surfaces de culture, mais aussi le rendement, en améliorant les conditions de culture, notamment en limitant le développement des drageons.

Les drageons sont des rejets qui poussent à partir de la racine de la plante de noisette et qui peuvent contaminer les parcelles de noisette en se développant en dehors de la zone cultivée. Cela peut poser un problème pour la culture des noisettes car ils peuvent concurrencer les plantes cultivées pour les ressources en eau et en nutriments, entraînant une baisse de rendement et une réduction de la qualité des noisettes produites.

En outre, les drageons peuvent être porteurs de maladies (anthracnose, oïdium, etc.) et de ravageurs (le balanin de la noisette, les punaises, phytopte du noisetier, etc.) qui peuvent se propager à la culture de noisette, entraînant des pertes importantes pour les producteurs.

Pour lutter contre les drageons, il existe plusieurs techniques comme le désherbage manuel ainsi que le désherbage mécanique au moyen de machines spécialisées pour arracher les drageons, ou l'utilisation de produits chimiques de type herbicide pour éradiquer les drageons.

En revanche, ces techniques sont généralement peu efficaces ou peuvent avoir des impacts négatifs sur l'environnement lorsque des produits chimiques sont utilisés. Le développement et l'utilisation de robots autonomes dans le domaine agricole semble être une solution qui permettrait de répondre aux enjeux et contraintes de production de noisettes, tout en limitant l'impact écologique.

A titre d'exemple, le document FR3001102A1 présente un dispositif agricole autonome comportant entre autres un système d'alimentation en énergie ainsi que des moyens de déplacement. L'invention dispose également d'un système d'optimisation de ces déplacements.

Cette invention permet de cultiver des parcelles agricoles, de les entretenir et de récolter des données.

Le document FR2994057A1 présente un robot de taille de vignes qui comprend principalement une structure mobile sur chenilles qui se déplace entre les rangs de pieds de vigne, un système de captation d'images des pieds de vigne et de leurs branches ainsi que des pinces coupantes.

Les images qui sont acquises sont tout d'abord traitées par un ordinateur embarqué qui donne ensuite les différentes consignes pour tailler les vignes. Un système de caméra ainsi qu'un procédé associé sont également présentés. Ce système permet entre autres d'identifier les branches qui doivent être sectionnées.

En revanche, ces dispositifs ne semblent pas adaptés à l'entretien de parcelles de cultures présentant des drageons à tailler.

Par ailleurs, des systèmes de coupes de drageons existent mais ne sont pas autonomes nécessitant alors la présence et diverses actions d'opérateurs pour maîtriser la prolifération desdits drageons. Ces systèmes ne peuvent donc être utilisés qu'un certains nombres de fois dans l'année, à la vue des coûts que leurs utilisations représentent, en moyenne cinq à six fois suivants le verger et la disponibilité des opérateurs pour cette tâche.

Les documents EP 4 016 112 A2, FR 2 617 366 A1, US 2021/092911 A1, EP 3 574 744 A1 et FR 3 053 870 A1 illustrent des solutions alternatives.

Il est donc important de mettre en place une stratégie de lutte contre les drageons adaptée aux caractéristiques de la parcelle de noisette et permettant de minimiser les risques de contamination tout en maintenant une production de qualité et élevée qui répond à la demande croissante.

Les nouvelles solutions, basées sur l'utilisation de robots agricole autonomes, doivent également s'adapter à tout type d'arbres ainsi que de terrains. En effet, les terrains sont généralement plats, mais qui peuvent également présenter des irrégularités qui risquent de limiter le déplacement de ces robots, ne pouvant finalement pas évoluer avec une autonomie totale.

### PRÉSENTATION DE L'INVENTION

La présente invention propose une alternative aux solutions existantes, avec un robot autonome agricole permettant de ne plus avoir recours aux intrants chimiques dans la lutte contre des drageons et en améliorant, par exemple, les conditions de travail des producteurs de noisette, sans dégrader le rendement des exploitations, au contraire.

À cet effet, la présente invention a pour objet un robot autonome agricole pour l'entretien d'un verger selon la revendication 1.

Selon une caractéristique particulière, le robot comporte au moins un panneau solaire sur tout ou partie de son châssis.

Selon une autre caractéristique particulière, le robot comporte au moins un LIDAR et/ou une caméra à haute résolution fixées sur son châssis.

Avantageusement, la tête de coupe comporte au moins une couronne de protection de tronc d'arbre interchangeable qui est fixée à ladite tête au moyen d'une pluralité de vis sur une surface périphérique supérieure Ps et/ou une surface périphérique inférieure *Pi* de ladite tête.

De façon avantageuse, la couronne de protection comporte une multitude de doigts. Selon une caractéristique particulière, les doigts sont d'une forme quasi-circulaire et/ou d'une forme oblongue, et sont principalement définis unitairement par un diamètre et un centre.

Selon une autre caractéristique particulière, deux doigts consécutifs sont espacés sur la couronne de protection par un espace inter-centre compris entre chaque centre caractérisant lesdits doigts.

Avantageusement, la tête de coupe est apte à couper des drageons d'arbres du verger.

De façon avantageuse, la tête de coupe est apte à gérer l'enherbement dans des rangs de vergers.

Enfin, la présente invention a également pour objet un procédé de coupe de drageons selon la revendication 10.

De façon avantageuse, le procédé comprend en outre une étape de repositionnement du robot.

Avantageusement, le procédé comprend en outre une étape de déplacement du robot vers une autre rangée d'arbres.

Selon une caractéristique particulière, le procédé comprend en outre une étape d'envoi d'une notification de fin des travaux.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à la même échelle. Sur l'ensemble des figures, les éléments identiques ou équivalents portent la même référence numérique.

Il est ainsi illustré en :
- Figure 1 : une vue de devant en perspective d'un robot agricole autonome de coupe de drageons selon le mode de réalisation préféré de l'invention ;
- Figure 2 : une vue de côté en perspective de la partie du robot comportant un outil de coupe ;
- Figure 3A : une vue de devant en perspective d'un bras du robot comportant un système de coupe ;
- Figure 3B : une autre vue de devant en perspective du bras du robot, lorsque le système de coupe présente une inclinaison négative ;
- Figure 3C : une autre vue de devant en perspective du bras du robot, lorsque le système de coupe présente une inclinaison positive ;
- Figure 4 : une vue de dessus en perspective du bras dans une configuration retractée ;
- Figure 5A : une vue de dessus en perspective d'une couronne de protection, selon un premier mode de réalisation ;
- Figure 5B : une vue de dessus en perspective d'une couronne de protection, selon un second mode de réalisation ;
- Figure 6 : les principales étapes d'un procédé de coupe de drageons ;
- Figure 7 : une représentation de l'usage du robot agricole autonome dans un verger.

### DESCRIPTION DÉTAILLÉE DE MODES DE RÉALISATION

Il convient de noter que certains éléments techniques bien connus de l'homme du métier sont ici décrits pour éviter toute insuffisance ou ambiguïté dans la compréhension de la présente invention.

Dans le mode de réalisation décrit ci-après, on fait référence à un robot autonome agricole, alimenté par des panneaux solaires, et dont les principales missions, sans que cela ne représente un aspect limitatif de l'invention, sont de couper et maitriser les rejets des noisetiers, permettant ainsi d'améliorer la récolte mécanisée des noisettes, et également d'entretenir l'enherbement des vergers de noisetier. Par ailleurs, ce robot peut fonctionner de manière continue au moyen de batteries. Ce robot est également léger et s'adapte à tout type de terrain.

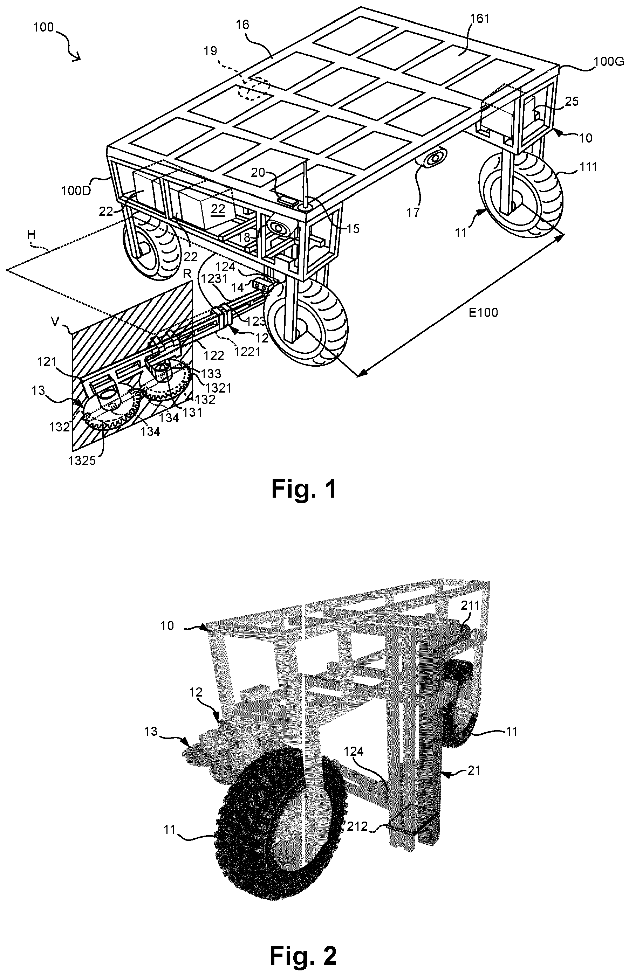

La **figure 1** représente un robot 100 agricole autonome, selon un mode de réalisation préféré de l'invention, qui comporte principalement un châssis 10, préférablement en aluminium, supportant des roues 11, un bras articulé 12, ainsi qu'un plateau 16 se situant au-dessus dudit châssis.

Chacune des roues 11 comporte un pneu 111 tout terrain permettant ainsi au robot 100 d'évoluer aisément dans différents reliefs de vergers. De plus, et afin d'évoluer avec une stabilité suffisante sur les différents terrains, le robot 100 a un empattement E100 de l'ordre de 2 m.

Le bras articulé 12 est relié au robot 100 par un axe de pivotement, et est mis en mouvant au moyen d'un moteur électrique 124 permettant de déployer ledit bras, d'une position située un côté 100D du robot 100, ledit côté étant préférablement situé sur la droite du robot 100, à une position souhaitée dans un plan horizontal H et présentant un angle R, défini entre le côté 100D du robot et un bord long 1231 de la partie 123, jusqu'à une position pouvant être sensiblement perpendiculaire audit côté. Dans d'autres modes de réalisation, le bras articulé 12 est fixé sur un côté 100G, situé sur la gauche du robot 100, et le positionnement du dudit bras étant alors effectué par rapport au côté 100G. En plus de déployer le bras articulé 12, le moteur électrique 124 sert également à mettre en mouvement ledit bras, en effectuant des rotations de faibles amplitudes du type « va-et-vient ».

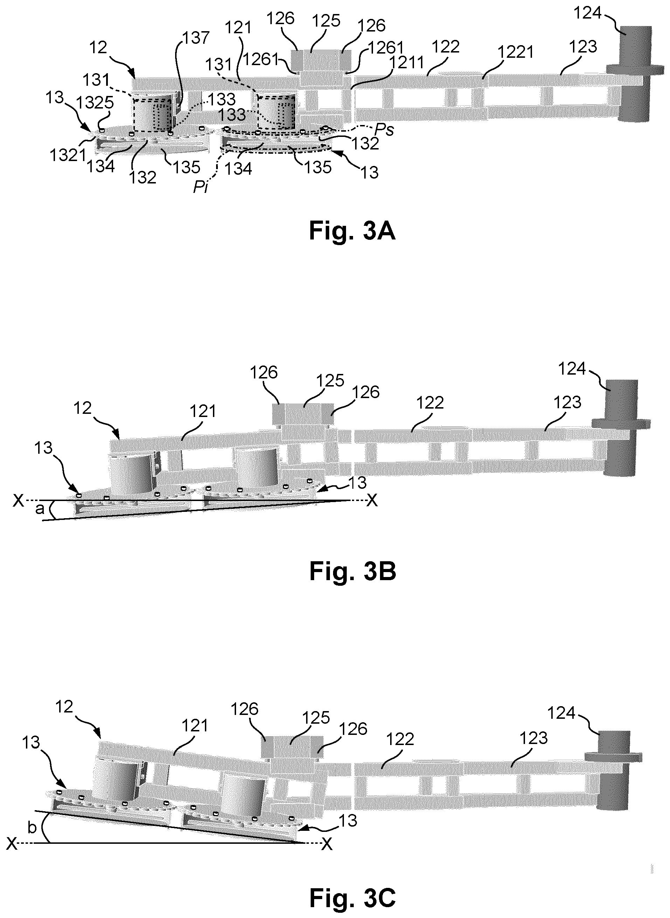

Dans le mode réalisation représenté à la figure 1, le bras articulé 12 comporte trois parties 121, 122 et 123, sans que cela ne représente une limite à l'invention. Avantageusement, les trois parties 121, 122 et 123 coulissent entre elles afin de pouvoir stocker notamment le bras articulé 12 de manière compacte. Le déploiement et la rétractation des trois partis 121, 122 et 123 se fait préférablement de manière manuelle, sans que cela ne représente une limite à l'invention. De plus, les parties 121 et 122 comprennent respectivement une butée 1211 et une butée 1222, telles que représentées sur la figure 3A, qui stoppent la course de déploiement desdites parties.

Les différentes partie 121, 122 et 123 du bras articulé 12 sont préférablement vissées entre elles. Cette caractéristique ne présente pas une limite à l'invention, l'homme du métier pouvant trouver d'autres solutions pour maintenir les différentes parties 121, 122 et 123 entre elles lorsque le bras articulé 12 est déployé.

La partie extrême 121 du bras articulé 12 comporte au moins une tête de coupe 13 interchangeable, pour couper des drageons, comportant une lame de coupe 134 mise en rotation au moyen d'un moteur 131 électrique, ladite tête comportant également un capteur de fin de course 133.

La tête de coupe 13 est fixée au niveau de la partie 121 du bras articulé 12 au moyen d'un axe horizontal 137, tel que représenté sur la figure 3A.

La fixation de la tête de coupe 13 autorise une inclinaison vers l'avant de ladite tête, d'un débattement de l'ordre de 10 mm.

Cette inclinaison est nécessaire afin de couper au plus prêt du sol les drageons. Ainsi, le capteur de fin de course 133 détecte le contact de la tête de coupe 13, sur laquelle il est installé, avec le tronc d'un arbre, pour commander ensuite un retrait de ladite tête afin que la lame de coupe 134 n'endommage pas ledit tronc.

Dans un autre mode de réalisation, le bras articulé 12 est équipé d'autres types d'outils, tels qu'une tête de coupe dédiée à la gestion de l'enherbement des vergers ou bien d'un dispositif de coupe adaptés au rejets lignifiés comme un sécateur électrique.

De plus, et dans le mode de réalisation présenté à la figure 1, le robot 100 comporte une multitude de capteurs, comme une caméra avant 17, une caméra latérale 18, une caméra arrière 19, un capteur de distance 14, un capteur de géolocalisation 20, ainsi qu'un système de communication sans fil 15 permettant d'échanger un flux de données à distance avec un opérateur au moyen d'une technologie connue par l'homme du métier (Bluetooth, 2G/3G/4G/5G, LoRa, ZigBee, Z-Wave, etc.), sélectionnée pour s'adapter au mieux aux à certaines caractéristiques du verger (superficie, type de réseau disponible, etc.).

La caméra avant 17 ainsi que la caméra arrière 19 vont principalement servir à aligner le robot 100 dans le verger et le positionner au mieux par rapport aux arbres. La caméra latérale 18 quant à elle va détecter la présence des drageons en analysant les images enregistrées et ainsi ordonner au robot 100 de couper les drageons. De plus, la caméra latérale 18 permet de détecter si une branche est coincée au niveau des têtes de coupe 13, afin que le robot 100 puisse effectuer des mouvements de dégagements du bras articulés 12 pour libérer lesdites têtes. Cette fonctionnalité garantie entre autres une autonomie complète du robot 100 sans qu'une intervention humaine ne soit nécessaire lors des phases de travaux dudit robot.

Dans certains modes de réalisation, le robot 100 est équipé d'au moins un lidar (acronyme anglais de *light detection and ranging,* pouvant être traduit en français par *détection et estimation de la distance par la lumière*) et/ou d'au moins une caméra à haute résolution afin de, par exemple, mesurer la taille des troncs d'arbres d'un verger, dénombrer les fruits présents sur un arbre, et ainsi réaliser un suivi des vergers (identification de chaque arbre).

Dans d'autres modes de réalisation, le robot 100 est apte à être utilisé dans le but d'étudier le sol d'un verger, notamment en cartographiant les sols en effectuant des mesures hydriques au moyen d'au moins un conductimètre par exemple, ou en effectuant des prélèvements d'échantillons de sols pour des analyses, au moyen par exemple d'une tarière électrique de prélèvement.

Dans d'autres modes de réalisation, le robot 100 intègre un détecteur et analyseur d'odeurs permettant de localiser dans le verger des truffes qui se développent en symbiose avec les noisetiers par exemple.

De plus, et afin d'assurer un suivi des différents sites de production, l'ensemble des données collectées sont enregistrées dans une base de données pour ensuite être analysées.

Le robot 100 fonctionne à l'énergie électrique et ces différents composants sont alimentés au moyen de batteries 22, rechargées au moyen d'au moins un panneau solaire 16 comportant une multitude de cellules photovoltaïques 161, ledit panneau solaire étant dimensionné pour fournir l'énergie électrique nécessaire au bon fonctionnement dudit robot. Les batteries 22 du robot 100 peuvent également être rechargée en branchant ledit robot sur un réseau de distribution d'électricité en complément de l'énergie électrique fournie par le panneau solaire 16.

Préférablement, les batteries 22 présentes deux tensions. Une première tension de 12 V pour une partie des batteries 22 pour alimenter notamment les capteurs, et une seconde tension de 24 V pour l'autre partie de batterie 22 servant à alimenter les moteurs des roues 11, du bras articulé 12, d'une direction du robot 100 ainsi que des têtes de coupe 13.

Dans d'autres modes de réalisation, la tension de certaines batteries 22 vaut 48 V afin d'augmenter la puissance d'alimentation des équipements qui y sont reliés.

Avantageusement, le robot 100 est suffisamment léger pour notamment ne pas écraser les noisettes se trouvant au sol, ni endommager les terrains lorsque ceux-ci sont gorgés d'eau à la suite par exemple de fortes pluies. Le robot a une masse M préférablement de l'ordre de 150 kg, sans que cela ne soit une limite à la présente invention. En effet, le choix de différents matériaux par l'homme du métier pour le châssis 10, ainsi que la quantité de batteries 22 vont influencer la masse M.

Le robot 100 peut alors travailler jusqu'à la récolte des noisettes car celles-ci ne sont pas abimées lors des passages desdits robots. Cette caractéristique technique du robot 100 représente un avantage pour les cultivateurs car il leur est possible ainsi d'entretenir les vergers tout au long de l'année, indépendamment des périodes de récoltes ainsi que des conditions météorologiques.

De plus, le robot 100 est en capacité de fonctionner la nuit, en l'équipant au préalable d'un système d'éclairage adapté.

Ainsi, la régularité des coupes des drageons réalisées par le robot 100 permet un entretien optimal des vergers.

Avantageusement, les images provenant des caméras avant 17, latérale 18 et arrière 19 sont également utilisées pour détecter la présence d'opérateurs qui se trouveraient à proximité du robot 100, afin d'éviter tout risque de blessures entre ledit robot et les opérateurs.

Enfin, le robot 100 comporte une unité de commande 25, tel qu'un ordinateur embarqué, un automate, ou tout autre équipement similaire connu par l'homme du métier permettant de piloter, commander et d'automatiser les fonctions de déplacement, de mesure et d'analyse implémentées dans ledit robot.

Préférablement, l'unité de commande 25 pilote la charge des batteries 22 ainsi que le suivi de consommation du robot 100.

De même, préférablement, tout ou partie des capteurs et actionneurs du robot 100 sont connectés à l'unité de commande 25.

La **figure 2** représente une vue en perspective de la partie du robot 100 sur laquelle est installée le bras articulé 12.

Un moteur pas à pas 211 est installé sur le châssis 10 du robot 100 afin de régler la hauteur du bras articulé 12 par rapport au sol, au moyen d'un linéaire vertical 21 qui comporte une courroie (non représentée ici) qui règle la hauteur d'une plateforme 212 sur laquelle est fixée le moteur 124, tel que représenté sur la figure 1 Le linéaire vertical est apte à supporter une charge de 35 kg.

Dans le mode de réalisation décrit ici, le robot 100 comporte un seul linéaire vertical 21.

Dans d'autres modes de réalisation, le robot 100 comporte deux linéaires verticaux afin de supporter une charge plus importante au niveau du bras articulé 12, lesdits linéaires étant entraîné par le même moteur pas à pas 211.

En effet, le verger ne présentant pas un sol régulier, des différences de hauteur de l'ordre de la dizaine de centimètres doivent être compensées dans le but de couper les drageons au plus près du sol. Sans le moteur pas à pas 211, une coupe, dite « à fleur », ne peut être réalisée.

La figure 3A, la figure 3B et la figure 3C représentent des vues en perspective du bras articulé 12 du robot 100, ledit bras étant équipé de deux têtes de coupe 13.

La **figure 3A** représente le bras articulé 12 et les deux têtes de coupe 13 lorsque ledit bras et en position de coupe des drageons.

Ainsi, la lame 134 est protégée de potentiels endommagements par rapport du sol au moyen d'une plaque de protection 135, située dans la partie inférieure de la tête de coupe 13. De plus, et pour protéger le tronc des arbres, la tête de coupe 13 comporte, sur une surface périphérique supérieure Ps et/ou une surface périphérique inférieure *Pi,* une couronne de protection 132 de tronc d'arbre comportant une multitude de doigt 1321 qui tiennent à distance de la lame 134 dudit tronc, tout en ayant la possibilité de couper les drageons. La multitude de doigts 1321 protègent donc l'arbre qui est en place, mais sont dimensionnés pour laisser rentrer les drageons dans les têtes de coupe 13 afin d'y être sectionnés par la lame coupante 134. La couronne de protection 132 est visée sur la tête de coupe 13 au moyen d'une pluralité de vis 1325, tel que représenté sur la figure 1.

Lorsque la tête de coupe 13 se présente devant le pied d'un noisetier et de ses drageons, ladite tête est légèrement inclinée vers l'avant en effectuant une rotation autour de l'axe 137.

De plus, la partie 121 étant articulée librement par rapport à la partie 122, la partie 121 peut pivoter dans le plan V vertical à la face avant 1221 de la partie 122, tel que représenté dans la figure 1, s'inclinant alors par rapport à la partie 122. Cette inclinaison permet une coupe des drageons au plus près du sol, facilitant notamment l'entretien des vergers, les drageons une fois coupés ne dépassant pas du sol, ou d'une hauteur négligeable.

L'état de l'inclinaison de la partie 121, positive, négative ou nulle, par rapport au plan 122 dans le plan V est mesuré au moyen de deux capteurs fin de course 126 à bouton-poussoir, installés de part et d'autre d'un support 125 qui positionné sur la partie 122. Chaque capteur fin de course 126 comporte notamment un bouton-poussoir 1261 qui se situe au-dessus de la partie 121. Ainsi, en fonction de l'état des boutons-poussoirs 1261 (ouvert ou fermé), il possible de déduire comment est incliné la partie 121 par rapport à la partie 122.

Les figure 3B et 3C représentent le bras articulé 12 pour différentes inclinaisons de la partie 121 comportant les deux têtes de coupe 13, par rapport à un axe X horizontal, représentant une inclinaison nulle

Ainsi sur la **figure 3B****,** lorsque l'inclinaison présente un angle a, cette information, mesurée par les capteurs fin de course 126 est interprétée par l'unité de commande 25 du robot 100 comme une position trop élevée du bras articulé 12 par rapport au sol. En effet, la partie 121, de part sa masse et part l'action de la gravité, s'incline naturellement vers le sol et ne peut être en contact avec lui. Si le robot 100 est supposé couper des drageons à ce moment, une commande est communiquée au moteur 211 pour abaisser le bras articulé 12.

Inversement, et sur la **figure 3C****,** lorsque l'inclinaison présente un angle b, cette information est interprétée par l'unité de commande 25 du robot 100 comme une position trop basse du bras articulé 12 par rapport au sol. Dans ce cas, une commande est communiquée au moteur 211 pour relever le bras articulé 12 afin que la partie 121 dudit bras soit dans une position proche de celle représentée à la figure 3A (c'est-à-dire avec une inclinaison nulle dans le plan V).

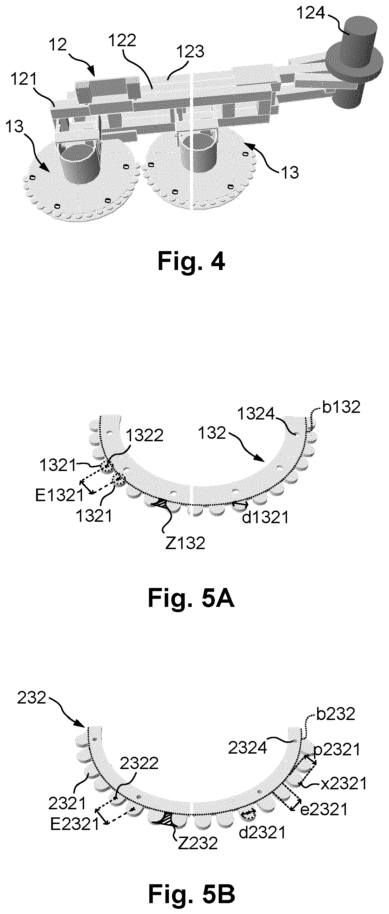

La figure 4 représente le bras articulé 12 lorsque chacune des parties 121, 122 et 123 que ledit bras comporte sont rétractées en les faisant coulissées les unes dans les autres. Avantageusement, le volume ainsi occupé par le bras articulé 12 est minimisé et permet un stockage ainsi qu'un transport plus aisé que lorsque ledit bras est déployé.

La **figure 5A** et la **figure 5B** représentent respectivement une couronne de protection 132 et une couronne de protection 232, selon un premier et un second mode de réalisation, lorsque celles-ci ne sont pas vissées sur la tête de coupe 13. Avantageusement, les couronnes de protection 132 et 232 sont interchangeables afin de s'adapter aux vergers dans lequel le robot 100 effectue des travaux d'entretien.

En effet, en fonction de la saison, et de la taille des drageons ainsi que des troncs des arbres, il peut être nécessaire de changer les couronnes de protection 132 et 232 dans le but d'effectuer des coupes optimales, tout en préservant le tronc des arbres. Les couronnes de protection 132 et 232 se changent alors aisément, lesdites couronnes comportant une multitude de trous de passage 1324 et 2324, taraudés ou non, permettant d'être vissées et dévissées des têtes de coupe 13.

Les couronnes de protection 132 et 232 sont entre autres caractérisées par un nombre N132 de doigts 1321 et un nombre N232 de doigts 2321. Préférablement, les doigts 1321 ont une forme externe quasi-circulaire et les doigts 2321 ont une forme externe oblongue, sans que cela ne représente une limite à l'invention, d'autres formes pouvant être utilisées par l'homme du métier, tel que triangulaire, rectangulaire.

Dans le mode de réalisation représenté à la figure 5A, la forme de chaque doigt 1321 est définie par un diamètre d1321 et un centre 1322. Les doigts 1321 sont répartis, de manière uniforme ou non, sur la périphérie de la couronne de protection 132, lesdits doigts étant espacés d'un espace inter-centre E1321. L'espace inter-centre E1321, le diamètre d1321 et un bord b132 externe de la couronne de protection 132, définissent alors une zone inter-doigt Z232, qui hachurée sur la figure 5A.

Dans le mode de réalisation représenté à la figure 5B, la forme oblongue de chaque doigt 2321 est définie par une extrémité en forme de demi-cercle de diamètre d2321, d'une largeur e2321 égale au diamètre d2321, ainsi que d'une profondeur p2321 moyenne entre un bord b232 externe de la couronne de protection 232 et une extrémité x2321 dudit doigt, et enfin un centre 2322. Comme précédemment, les doigts 2321 sont répartis, de manière uniforme ou non, sur la périphérie de la couronne de protection 232, lesdits doigts étant espacés d'un espace inter-centre E2321. Entre deux doigts 2321 consécutifs et le bord b232 externe de la couronne de protection 232, est défini une zone inter-doigt Z232, qui hachurée sur la figure 5B.

De manière avantageuse, les zones inter-doigt Z132 et Z232 sont les espaces dans lesquels les drageons s'insèrent lors des travaux de coupes, et permettent aux lames 134 de couper lesdits drageons. En revanche, les doigts 1321 et 2321 maintiennent à distance le tronc de l'arbre des lames 134 afin que les troncs ne soient pas endommagés par lesdites lames.

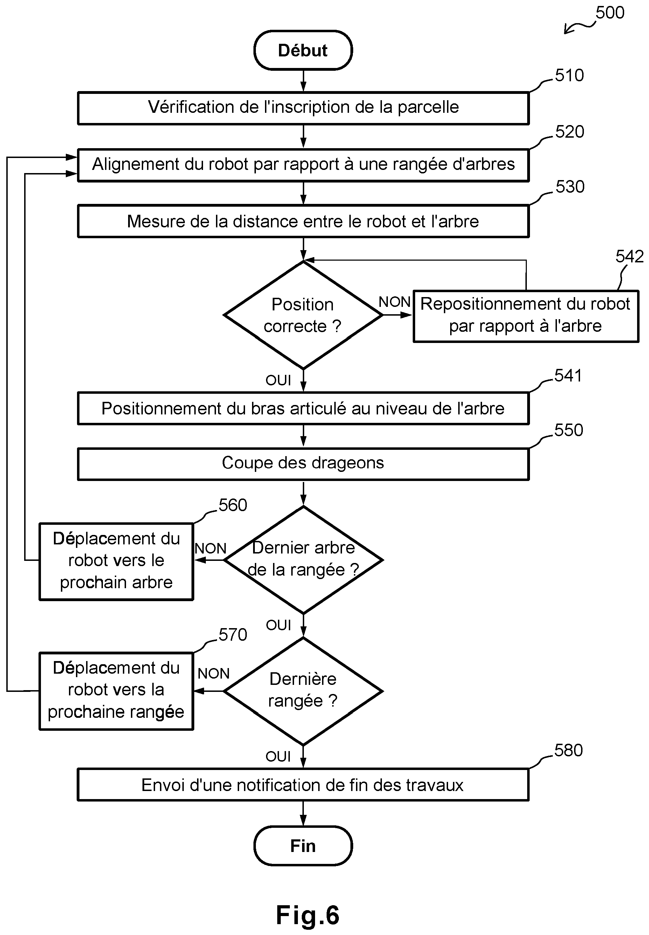

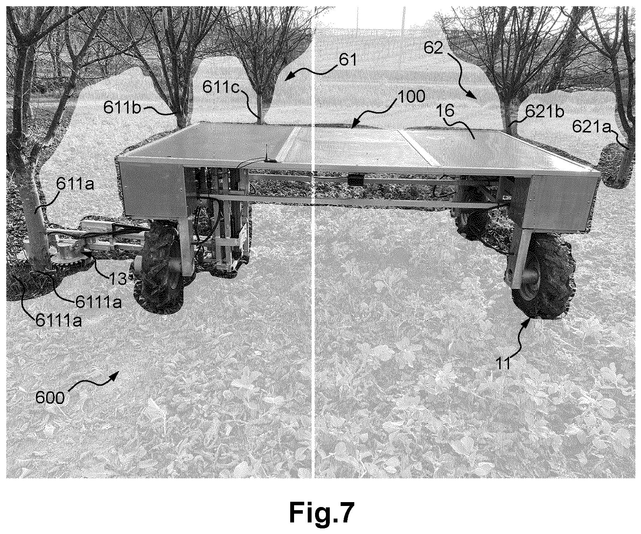

La **figure 6** représente les principales étapes d'un procédé 500 de coupe de drageon dans un verger 600, tel que représenté à la figure 7, au moyen du robot 100 agricole autonome, pour un mode de réalisation particulier.

Le procédé 500 comprend principalement :
- une étape 510 de vérification de l'inscription du verger 600 dans un logiciel de cartographie pour autoriser le démarrage du robot 100 ;
- une étape 520 d'alignement du robot 100 par rapport à une rangée d'arbres 61-63, telle que représentée à la figure 7 ;
- une étape 530 de mesure de la distance entre le robot 100 et un arbre 611a-c, 621a-b du verger 600 ;
- une étape de positionnement du bras articulé 12 au niveau de l'arbre si la position du robot 100 est correcte et une étape 542 de repositionnement du robot 100 par rapport à l'arbre si la position du robot 100 n'est pas correcte ;
- une étape 550 de coupe des drageons au moyen des têtes de coupe 13 du robot 100 ;
- une étape 560 de déplacement du robot vers le prochain arbre, si la rangée d'arbres 61-62 dans laquelle se trouve le robot en comporte encore ;
- une étape 570 de déplacement du robot vers une autre rangée d'arbres 61-62, s'il reste des rangées à travailler dans le verger 600 ; et
- une étape 580 d'envoi d'une notification de fin des travaux à un opérateur.

L'étape 510 a pour but de s'assurer que le verger 600 dans lequel se trouve le robot 100 a été au préalable renseigné dans le logiciel de cartographie inclus dans l'unité de commande 25 dudit robot. Le robot 100 va alors comparer son positionnement, obtenu au moyen de son capteur de géolocalisation 20, avec les zones de travail qui ont été géoréférencées. Si la position du robot 100 se trouve dans une zone de travail, le robot 100 sera autoriser à se déplacer ainsi qu'à mettre en fonctionnement les têtes de coupe 13. Ainsi, le robot 100 ne peut évoluer en autonomie uniquement dans une zone qui a été prédéterminée.

Il s'agit d'une sécurité nécessaire pour éviter notamment tout risque de dégradation dans des zones de cultures non-sélectionnées.

De plus, cette vérification va permettre de contenir le robot 100 dans une zone, même si celle-ci ne dispose pas d'une limite physique. En effet, le verger 600 peut ne pas être délimité par des clôtures ou des barrières par exemple, empêchant physiquement le déplacement du robot 100 vers un autre emplacement. Une fois la consigne de démarrage donnée, le robot 100 est alors autorisé à débuter les travaux de coupe des drageons

L'étape 520 d'alignement du robot 100 dans le verger 600, et par rapport à une rangée d'arbre 61-62, va consister à positionner le robot 100 afin que ladite rangée, où des travaux de coupes de drageons sont planifiés, se trouve du côté où est installé le bras articulé 12. L'étape 520 est réalisée au moyen des images collectées par les caméras avant 17 et arrière 19 du robot 100. L'arbre 611a-c, 621a-b sur lequel le robot 100 va procéder à un entretien est ensuite détecté puis sélectionné au moyen de la caméra latérale 18. Dans certains modes de réalisation, et lorsque chaque arbre 611a-c, 621a-b a été renseigné dans le logiciel de cartographie du robot, il est possible de ne sélectionner que certains arbres 611a-c, 621a-b pour réaliser les travaux. Cette sélection permet notamment d'optimiser le temps de passage du robot 100 dans le verger 600 en ne s'attardant pas sur des arbres 611a-c, 621a-b qui ne nécessitent pas d'entretien.

L'étape 530 de mesure de la distance entre le robot 100 et l'arbre 611a-c, 621a-b, du verger 600 est ensuite réalisée au moyen du capteur de distance 14.

Si la position du robot 100, et sa distance par rapport à l'arbre 611a-c, 621a-b, est correcte, le robot va ensuite faire pivoter le bras articulé 12 au moyen d'un mouvement de rotation réalisé par le moteur électrique 124 lors de l'étape 541 de positionnement dudit bras. De plus, la hauteur du bras articulé 12 par rapport au sol du verger 600 est adaptée et réglée au moyen du moteur 211 afin que les têtes de coupe 13 soient au plus près de la base des drageons 6111a, tels que représentés sur la figure 7.

Dans le cas contraire où la position du robot 100, ainsi que sa distance par rapport à l'arbre 611a-c, 621a-b ne sont pas correctes, ledit robot se déplace lors de l'étape 542 de repositionnement automatique pour ensuite pouvoir déployer le bras articulé 12.

L'étape 550 de coupe des drageons au moyen des têtes de coupe 13 du robot 100 est ensuite réalisée. Au préalable, et durant l'étape 550, une analyse de la quantité de drageons a coupé est effectuée au niveau de l'arbre 611a-c, 621a-b, afin que le robot 100 adapte sa vitesse de déplacement, qui est généralement de l'ordre de 1,5 km/h. Le robot 100 n'est donc pas dépendant du développement végétatif du verger 600 et peut être utilisé sans une préparation au préalable dudit verger, dans le cas où par exemple, une quantité importante de drageons serait à couper. De plus, s'il n'y a pas de drageons à couper, le robot n'approche pas l'arbre 611a-c, 621a-b, et passe au suivant. De même, et avant de passer à l'arbre suivant, un contrôle est effectué par la caméra latérale 18 afin de s'assurer que tous les drageons 6111a ont été coupés à raz. En effet, pour entretenir correctement le verger 600, les drageons 6111a doivent être coupés au plus près du sol afin que ceux-ci ne soient pas notamment des zones dans lesquelles des noisettes se retrouveraient piégées. Pour cela, les têtes de coupe 13 sont positionnées au plus près des drageons 6111a et vont enrouler le pied de l'arbre, pour couper lesdits drageons.

De plus, le moteur 124 réalise des rotations d'amplitudes faibles qui ont pour conséquence d'engendrer des mouvements de va-et-vient du bras articulé 12 fait et permettent de faciliter la coupe des drageons 6111a.

Lorsque les drageons 6111a sont coupés, les têtes de coupe 13 exercent une pression au niveau du pied de l'arbre, pression qui est transmise sur le bras articulé 12, ce qui a pour effet de rétracter ledit bras au moyen du moteur 124. Ainsi, la puissance du moteur 124 est ajustée en fonction de deux paramètres :
- la densité de drageons 6111a à couper, qui est évaluée au moyen de la caméra 18 ;
- la quantité des inclinaisons des têtes de coupe 13 provoqués par le contact avec les drageons et qui indique également un nombre de drageons 6111a qui ont été coupés.

De plus, l'unité de commande 25 mesure en continue une intensité électrique *Imoteur* qui parcourt indépendamment chacun des moteurs 131 qui mette en rotation leur lame 134. Cette mesure continue de l'intensité électrique Imoteur permet d'évaluer les contraintes mécaniques au niveau de chacune des lames 134. En effet, plus l'intensité électrique Imoteur est élevée, et plus les contraintes mécaniques au niveau des lames 134 sont importantes. En fonction de certains seuils et des durées observées de dépassements de ces seuils, des actions sont définies, telles que la mise en sécurité du robot 100, l'envoi de notifications à un opérateur.

Durant l'étape 560 de déplacement du robot 100 vers le prochain arbre, le bras articulé 12 est remonté si besoin afin de faciliter le déplacement dudit robot, et éviter notamment que les têtes tondeuses 13 ne s'endommagent en entrant en contact avec le sol.

Une fois les coupes de drageons 6111a effectuées dans une rangée d'arbres 61-63, l'étape 570 de déplacement du robot 100 vers une autre rangée est réalisée dans le cas où la rangée entretenue n'est pas la dernière. Le robot 100 va alors effectuer un demi-tour au bout de la rangée et de nouveau s'aligner avec les arbres d'une rangée et continuer les coupes jusqu'à ce que l'ensemble des pieds des arbres aient été entretenus.

Lorsque les travaux d'entretiens ont été finalisés dans le verger, une notification est envoyée à au moins un opérateur pour l'en informer. Cette notification peut être effectuée par exemple au moyen d'un SMS (acronyme en anglais de *Short Message Service*), ou par tout autre moyen de communication connue par l'homme du métier, et fonction des possibilités d'envoi d'informations à distance dans la zone géographique où se situe le robot 100.

La **figure 7** représente un exemple de mise en situation d'usage du robot 100 dans le verger 600 pour couper des drageons 6111a.

Grâce à l'utilisation du robot 100 dans le verger 600, l'utilisation d'herbicides de contact visant à maitriser les drageons 6111a ainsi que l'utilisation d'herbicides systémiques pour maitriser l'enherbement sur les rangs 61-62 sont diminuées.

De plus, et du fait de son évolution de manière autonomie, le robot 100 est apte à entretenir le verger 600 à une fréquence plus élevée que les solutions existantes qui nécessitent la présence d'au moins un opérateur en continue. Ainsi, il peut être envisagé au minimum un passage mensuel du robot 100 dans le verger 600, alors que les solutions existantes, pour des raisons de coûts et de temps essentiellement, doivent se limiter à une moyenne de quatre passages par an.

Pour finir, le robot 100 autonome agricole est apte, moyennant notamment des adaptations de ses dimensions qui peuvent être réalisées par l'homme du métier, à être utilisé dans des vergers 600 où d'autres types d'arbre sont cultivés et produisant par exemple des fruits à coque (noyers, châtaignés, amandiers, etc.), des fruits à noyaux (pruniers, abricots, cerises, etc.) ou des fruits à pépins (pommiers, poiriers, citronniers, etc.).

## Revendications

1. Robot (100) autonome agricole pour l'entretien d'un verger (600) dans lequel est cultivé des arbres (611a-c, 621a-b), ledit robot comprenant un châssis (10), supporté par quatre roues (11) adaptées à une évolution sur tout type de terrain, et définissant un empattement E100, de l'ordre de 2 m entres les roues avant (11), ledit châssis intégrant une caméra avant (17), une caméra latérale (18), une caméra arrière (19), un système de communication (15), un capteur de géolocalisation (20), une unité de commande (25) ainsi qu'au moins une batterie (22), **caractérisé en ce que** ledit robot comporte au moins un bras articulé (12), comportant au moins deux parties (121, 122, 123) coulissantes l'une dans l'autre, ledit bras réalisant des rotations d'un angle R dans un plan horizontal H au moyen d'un moteur électrique (124), ledit bras comportant au moins une tête de coupe (13) interchangeable, ainsi qu'un capteur de distance (14) pour mesurer une distance entre ledit robot et lesdits arbres ; ledit robot dans lequel le bras articulé (12) se positionne verticalement au moyen d'un linéaire vertical (21) fixé sur le châssis (10), et comportant une plateforme (212) entraînée au moyen d'un moteur pas à pas (211) ; la partie (121) du bras articulé (12) sur laquelle est fixée la tête de coupe (13), s'inclinant d'un angle a ou b, dans un plan vertical V d'une face avant (1221) dudit bras.

2. Robot (100) selon l'une des revendications précédentes, et comportant au moins un panneau solaire (16) sur tout ou partie du châssis (10) dudit robot.

3. Robot (100) selon l'une quelconque des revendications précédentes, et comportant au moins un LIDAR et/ou une caméra à haute résolution fixées sur le châssis (10) dudit robot.

4. Robot (100) selon l'une quelconque des revendications précédentes, et dans lequel la tête de coupe (13) comporte au moins une couronne de protection (132, 232) de tronc d'arbre interchangeable qui est fixée à ladite tête au moyen d'une pluralité de vis (1325) sur une surface périphérique supérieure Ps et/ou une surface périphérique inférieure *Pi* de ladite tête.

5. Robot (100) selon la revendication 4, et dans lequel la couronne de protection (132, 232) comporte une multitude de doigts (1321, 2321).

6. Robot (100) selon la revendication 5, et dans lequel les doigts (1321, 2321) sont d'une forme quasi-circulaire et/ou d'une forme oblongue, et sont définis unitairement par un diamètre (d1321) et un centre (1322).

7. Robot (100) selon la revendication 6, et dans lequel deux doigts (1321, 2321) consécutifs sont espacés sur la couronne de protection (132, 232) par un espace inter-centre (E1321, E2321) compris entre chaque centre (1322, 2322) caractérisant lesdits doigts.

8. Robot (100) selon l'une quelconque des revendications précédentes, et dans lequel la tête de coupe (13) est apte à couper des drageons (6111a) d'arbres (611a) du verger (600).

9. Robot (100) selon l'une quelconque des revendications précédentes, et dans lequel la tête de coupe (13) est apte à gérer l'enherbement dans des rangs (61-62) de vergers (600).

10. Procédé (500) de coupe de drageons (6111a) au moyen d'au moins une tête de coupe (13), ledit procédé étant mis en œuvre par un robot (100) selon l'une des revendications 1 à 9, et **caractérisé en ce qu'**il comporte les étapes suivantes :
- (510) de vérification de l'inscription du verger (600) dans un logiciel de cartographie de l'unité de commande (25) pour autoriser le démarrage du robot (100) ;
- (520) d'alignement du robot (100) par rapport à une rangée d'arbres (61-62) au moyen des caméras avant (17) et arrière (19) dudit robot ;
- (530) de mesure de la distance entre le robot (100) et un arbre (611a-c, 621a-b) du verger (600) ;
- (541) de positionnement du bras articulé (12) du robot (100) au moyen du moteur électrique (124) ainsi que du moteur pas à pas (211) ;
- (550) de coupe des drageons au moyen des têtes de coupe (13) du robot (100) ; et
- (560) de déplacement du robot vers un prochain arbre ;

11. Procédé (500) selon la revendication 10, comprenant en outre une étape (542) de repositionnement du robot (100).

12. Procédé (500) selon la revendication 10 ou 11, comprenant en outre une étape (570) de déplacement du robot vers une autre rangée d'arbres (61-62).

13. Procédé (500) selon l'une quelconque des revendications 10 à 12, comprenant en outre une étape (580) d'envoi d'une notification de fin des travaux.

## Patentansprüche

1. Autonomer landwirtschaftlicher Roboter (100) für die Pflege eines Obstgartens (600), in dem Bäume (611a-c, 621a-b) angebaut werden, wobei der Roboter ein Fahrgestell (10) umfasst, das von vier Rädern (11) gestützt wird, die für die Entwicklung auf jedem Geländetyp ausgelegt sind, und einen Radstand E100 von etwa 2 m zwischen den Vorderrädern (11) definiert, wobei das Fahrgestell eine vordere Kamera (17), eine seitliche Kamera (18), eine hintere Kamera (19), ein Kommunikationssystem (15), einen Geolokalisierungssensor (20), eine Steuereinheit (25) sowie mindestens eine Batterie (22) aufnimmt, **dadurch gekennzeichnet, dass** der Roboter mindestens einen Gelenkarm (12) aufweist, der mindestens zwei ineinander verschiebbare Teile (121, 122, 123) aufweist, wobei der Arm mittels eines Elektromotors (124) Drehungen um einen Winkel R in einer horizontalen Ebene H durchführt, wobei der Arm mindestens einen austauschbaren Schneidkopf (13) sowie einen Abstandssensor (14) zum Messen eines Abstands zwischen dem Roboter und den Bäumen aufweist; wobei der Roboter, bei dem der Gelenkarm (12) mittels einer am Fahrgestell (10) befestigten vertikalen Linearführung (21) vertikal positioniert wird, eine Plattform (212) aufweist, die mittels eines Schrittmotors (211) angetrieben wird; wobei sich der Teil (121) des Gelenkarms (12), an dem der Schneidkopf (13) befestigt ist, in einem Winkel a oder b in einer vertikalen Ebene V einer Vorderseite (1221) des Arms neigt.

2. Roboter (100) nach einem der vorhergehenden Ansprüche, und umfassend mindestens ein Solarmodul (16) auf dem gesamten oder einem Teil des Fahrgestells (10) des Roboters.

3. Roboter (100) nach einem der vorhergehenden Ansprüche, und umfassend mindestens ein LIDAR und/oder eine hochauflösende Kamera, die am Fahrgestell (10) des Roboters befestigt sind.

4. Roboter (100) nach einem der vorhergehenden Ansprüche, und wobei der Schneidkopf (13) mindestens einen austauschbaren Baumstamm-Schutzkranz (132, 232) aufweist, der mittels einer Vielzahl von Schrauben (1325) an einer oberen Umfangsfläche Ps und/oder einer unteren Umfangsfläche *Pi* des Kopfes befestigt ist.

5. Roboter (100) nach Anspruch 4, und wobei der Schutzkranz (132, 232) eine Vielzahl von Fingern (1321, 2321) aufweist.

6. Roboter (100) nach Anspruch 5, und wobei die Finger (1321, 2321) eine quasi-kreisförmige und/oder längliche Form haben und durch einen Durchmesser (d1321) und einen Mittelpunkt (1322) definiert sind.

7. Roboter (100) nach Anspruch 6, und wobei zwei aufeinanderfolgende Finger (1321, 2321) auf dem Schutzkranz (132, 232) durch einen Zwischenraum (E1321, E2321) zwischen jedem Mittelpunkt (1322, 2322) beabstandet sind, der die Finger charakterisiert.

8. Roboter (100) nach einem der vorhergehenden Ansprüche, und wobei der Schneidkopf (13) in der Lage ist, Seitentriebe (6111a) von Bäumen (611a) des Obstgartens (600) zu schneiden.

9. Roboter (100) nach einem der vorhergehenden Ansprüche, und wobei der Schneidkopf (13) in der Lage ist, die Begrünung in Reihen (61-62) von Obstgärten (600) zu verwalten.

10. Verfahren (500) zum Schneiden von Seitentrieben (6111a) mittels mindestens eines Schneidkopfes (13), wobei das Verfahren von einem Roboter (100) nach einem der Ansprüche 1 bis 9 umgesetzt wird, und **dadurch gekennzeichnet ist, dass** es folgende Schritte umfasst:
- (510) Überprüfen der Registrierung des Obstgartens (600) in einer Kartierungssoftware der Steuereinheit (25), um das Starten des Roboters (100) zu ermöglichen;
- (520) Ausrichten des Roboters (100) in Bezug auf eine Baumreihe (61-62) mittels der vorderen (17) und hinteren (19) Kameras des Roboters;
- (530) Messen des Abstands zwischen dem Roboter (100) und einem Baum (611a-c, 621a-b) des Obstgartens (600);
- (541) Positionieren des Gelenkarms (12) des Roboters (100) mittels des Elektromotors (124) sowie des Schneidmotors (211);
- (550) Schneiden der Seitentriebe mittels der Schneidköpfe (13) des Roboters (100); und
- (560) Bewegen des Roboters zu einem nächsten Baum;

11. Verfahren (500) nach Anspruch 10, weiter umfassend einen Schritt (542) zum Neupositionieren des Roboters (100).

12. Verfahren (500) nach Anspruch 10 oder 11, weiter umfassend einen Schritt (570) zum Bewegen des Roboters zu einer anderen Baumreihe (61-62).

13. Verfahren (500) nach einem der Ansprüche 10 bis 12, weiter umfassend einen Schritt (580) des Sendens einer Benachrichtigung über das Ende der Arbeiten.

## Claims

1. Autonomous agricultural robot (100) for maintaining an orchard (600) wherein trees (611a-c, 621a-b) are cultivated, said robot comprising a chassis (10), supported by four wheels (11) suitable for moving on any type of terrain, and defining a wheelbase E100, of the order of 2 m between the front wheels (11), said chassis integrating a front camera (17), a side camera (18), a rear camera (19), a communication system (15), a geolocation sensor (20), a control unit (25) as well as at least one battery (22), **characterised in that** said robot comprises at least one articulated arm (12), comprising at least two parts (121, 122, 123) sliding in one another, said arm performing rotations of an angle R in a horizontal plane *H* by means of an electric motor (124), said arm comprising at least one interchangeable cutting head (13), as well as a distance sensor (14) for measuring a distance between said robot and said trees; said robot wherein the articulated arm (12) is positioned vertically by means of a vertical linear element (21) attached to the chassis (10), and comprising a platform (212) driven by means of a stepper motor (211); the part (121) of the articulated arm (12) on which the cutting head (13) is attached being inclined at an angle a or b, in a vertical plane V of a front face (1221) of said arm.

2. Robot (100) according to one of the preceding claims, and comprising at least one solar panel (16) on all or part of the chassis (10) of said robot.

3. Robot (100) according to any one of the preceding claims, and comprising at least one LIDAR and/or a high-resolution camera attached to the chassis (10) of said robot.

4. Robot (100) according to any one of the preceding claims, and wherein the cutting head (13) comprises at least one interchangeable tree trunk protection ring (132, 232) which is attached to said head by means of a plurality of screws (1325) on an upper peripheral surface Ps and/or a lower peripheral surface *Pi* of said head.

5. Robot (100) according to Claim 4, and wherein the protection ring (132, 232) comprises a plurality of fingers (1321, 2321).

6. Robot (100) according to Claim 5, and wherein the fingers (1321, 2321) have a near-circular shape and/or an oblong shape, and are defined individually by a diameter (d1321) and a centre (1322).

7. Robot (100) according to Claim 6, and wherein two consecutive fingers (1321, 2321) are spaced apart on the protection ring (132, 232) by an inter-centre space (E1321, E2321) between each centre (1322, 2322) characterising said fingers.

8. Robot (100) according to any one of the preceding claims, and wherein the cutting head (13) is capable of cutting suckers (6111a) from trees (611a) in the orchard (600).

9. Robot (100) according to any one of the preceding claims, and wherein the cutting head (13) is capable of managing the vegetation cover in rows (61-62) of orchards (600).

10. Method (500) for cutting suckers (6111a) by means of at least one cutting head (13), said method being implemented by a robot (100) according to one of Claims 1 to 9, and **characterised in that** it comprises the following steps:
- (510) of verifying that the orchard (600) is registered in mapping software of the control unit (25) in order to authorise the robot (100) to start up;
- (520) of aligning the robot (100) with respect to a row of trees (61-62) by means of the front (17) and rear (19) cameras of said robot;
- (530) of measuring the distance between the robot (100) and a tree (611a-c, 621a-b) in the orchard (600);
- (541) of positioning the articulated arm (12) of the robot (100) by means of the electric motor (124) as well as the stepper motor (211);
- (550) of cutting the suckers by means of the cutting heads (13) of the robot (100); and
- (560) of moving the robot to a next tree;

11. Method (500) according to Claim 10, further comprising a step (542) of repositioning the robot (100).

12. Method (500) according to Claim 10 or 11, further comprising a step (570) of moving the robot to another row of trees (61-62).

13. Method (500) according to any one of Claims 10 to 12, further comprising a step (580) of sending a notification that the work is complete.
